# EUROPEAN PATENT APPLICATION

(11) **EP 1 834 908 A1**
(43) Date of publication of application: **19.09.2007**
(21) Application number: 06123950.5
(22) Date of filing: 13.11.2006
(51) Int. Cl.: B65G 63/02

(54) **Container transportation carrier and container transportation system**

(30) Priority: 15.03.2006 CN 200610024686
(71) Applicant: Shanghai Zhenhua Port Machinery Co., Ltd., 200125 Shanghai (CN)
(72) Inventor: Tian, Hong, 200125 Shanghai (CN); Wang, Xiaqi, 200125 Shanghai (CN)
(74) Representative: Modiano, Micaela Nadia

(57) **Abstract**

The present invention discloses a container transportation carrier (100) comprising, a bottom frame (102); a set of wheels (104), mounted on said bottom frame, said set of wheels being positioned on a set of tracks (200) so that said container transportation carrier travels along the tracks; wheel driving means (106), mounted on said bottom frame, for driving said set of wheels; rotary mechanism (108), mounted on said bottom frame, being rotatable with respect to said bottom frame; a rotary platform (110), spanned on said rotary mechanism by rotary supporting means (112), with containers positioned on said rotary platform; rotary driving means (114), mounted on said bottom frame, for driving said rotary mechanism to rotate said rotary platform. The present invention also discloses a container transportation system and a whole arrangement scheme of container wharf using the above transportation carrier. Using the technical solutions of the present invention, the speed of transportation between cranes at shore of container wharf and ones at the container yard will be significantly increased and the problem of 90-degree rotation will be solved. In addition, the handling way can be used at non-automatic wharfs, and, preferably, at automatic wharfs. The advantage of efficient handling is to enhance efficiency and technical level of the container handling port.

## Description

### Field of Invention

The present invention relates to container loading/unloading technique at a container wharf, more particularly, to a container transportation system and container transportation carriers used in the system.

### Background of Invention

Bloom requirements for container transportation and throughput at container ports are continuously growing in the world, which have newer and higher requirements for devices for container handling technique as well as process for loading/unloading techniques. Therefore, it is a pressing demand for developing and designing devices for container handling with high efficiency so as to meet requirements of scale, high-speed and automation of container transportation of wharf.

Since the 1990s, with growth of global economy and trade, freight volume of containers steeply rises. With promotion of strong transportation requirements and good benefit of technique and economy, hi-tech technique for crane mechanism of containers, particularly automatic control technique, has fully developed However, the handling systems of the container wharf used at present have the following deficiencies:

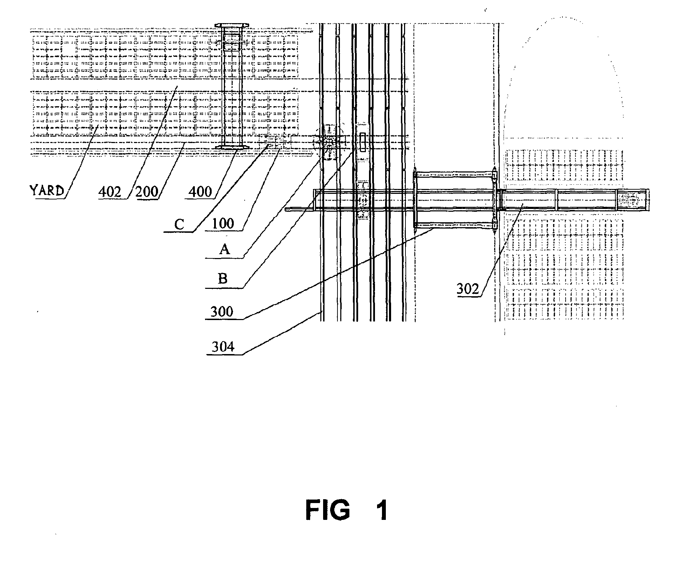

As shown in figure 1, generally speaking, a container wharf can be divided into two parts: front of wharf and container yard at rear of wharf. The container crane at front of wharf is used to hoist containers from a container ship. In recent years, in order to increase usage of crane at the container yard and to enhance work efficiency at the container yard, the following scheme is used for arrangement of containers: containers on the container ship are generally arranged in the direction that the long axis of the containers is in the same direction of the long axis of the ship, so the containers at front of wharf are arranged in a direction parallel to the water front of wharf; at the container yard at rear of wharf, the containers are generally arranged in the direction that the long axis of the containers is in a direction perpendicular to the water front of wharf, so the containers need to be turned by 90 degrees from front of wharf to the container yard at rear of wharf. At present, the used method comprises performing transportation between front and rear of wharf by flat carriers driven by gas engine, that is, positioning containers from the ship to the flat carrier by the container crane at front of wharf, then transporting the containers to the area of container yard by the flat carriers, and hoisting the containers from the flat carriers by a crane of container yard to the container yard. In the above process, the following problems will arise:
1) The flat carriers travels freely on road and are difficult to be in a precise direction as the carriers traveling on tracks, which will cause difficulties for cranes hoisting and will affect the handling speed,
2) The flat carriers need to be driven by persons, which is a disadvantage for complete automation;
3) The flat carriers are driven by gas engine that produces great pollution.

Thus, to address the above shortcomings, the object of the present invention is to provide an efficiency and power-saving carrier for transporting containers between cranes at shore of container wharf and the cranes at the container yard .

### Summary of Invention

The object of the invention is to provide an efficiency and power-saving carrier for transporting containers between cranes at shore of container wharf and the cranes at the container yard.

According to a first aspect of the invention, providing a container transportation carrier, comprising:
a bottom frame;
a set of wheels, mounted on said bottom frame, said set of wheels being positioned on a set of tracks so that said container transportation carrier travels along the tracks;
a wheel driving means, mounted on said bottom frame, for driving said set of wheels;
a rotary mechanism, mounted on said bottom frame, being rotatable with respect to said bottom frame;
a rotary platform, spanned on said rotary mechanism by rotary supporting means, with containers positioned on said rotary platform;
a rotary driving means, mounted on said bottom frame, for driving said rotary mechanism to rotate said rotary platform.

Preferably, said rotary mechanism is cylindrical, being positioned at center of said bottom frame which aligns with the center of said rotary platform. Said rotary mechanism rotates by 90 degrees each time. Said rotary supporting means comprises four supporting pieces at quartering points of circumference of said cylindrical rotary mechanism. Said wheel driving means is one selected from the group including: electric means, hydraulic power transmission means and aerodynamic means

According to a second aspect of the invention, providing a container transportation system, comprising:
at least one set of carrier tracks, said carrier tracks parallel to tracks of a yard crane at rear of wharf, that is, parallel to direction of long axis of containers piled at rear of wharf;
transportation carriers, at least one of the transportation carriers on the at least one set of carrier tracks, said transportation carrier, comprising:
   a bottom frame;
   a set of wheels, mounted on said bottom frame, said set of wheels being positioned on a set of tracks so that said container transportation carrier travels along the tracks,
   a wheel driving means, mounted on said bottom frame, for driving said set of wheels;
   a rotary mechanism, mounted on said bottom frame, being rotatable with respect to said bottom frame;
   a rotary platform, spanned on said rotary mechanism by rotary supporting means, containers positioned on said rotary platform; rotary driving means, mounted on said bottom frame, for driving said rotary mechanism to rotate said rotary platform.

Preferably, said rotary mechanism rotates by 90 degrees each time. Said wheel driving means is one selected from the group including electric means, hydraulic power transmission means and aerodynamic means. Said set of wheels comprises four sets of wheels, respectively positioned left side and right side of said bottom frame. The space between said carrier tracks is the same that between sets of wheels at both sides of said bottom frame.

According to a third aspect of the invention, providing a container transportation system, comprising:
a container crane at front of wharf, said container crane having a first track and a second track perpendicular to each other, said container crane is movable in two direction perpendicular to each other along the first and second tracks;
a yard crane at rear of wharf, said yard crane having a third track parallel to the first track of said container crane and perpendicular to the second track of said container crane;
at least one set of carrier tracks, said carrier tracks parallel to tracks of a yard crane at rear of wharf, that is, parallel to the direction of long axis of containers piled at rear of wharf;
transportation carriers, at least one of the transportation carriers on the at least one set of carrier tracks, said transportation carrier, comprising:
   a bottom frame;
   a set of wheels, mounted on said bottom frame, said set of wheels being positioned on a set of tracks so that said container transportation carrier travels along the tracks,
   a wheel driving means, mounted on said bottom frame, for driving said set of wheels;
   a rotary mechanism, mounted on said bottom frame, being rotatable with respect to said bottom frame;
   a rotary platform, spanned on said rotary mechanism by rotary supporting means, containers positioned on said rotary platform;
   a rotary driving means, mounted on said bottom frame, for driving said rotary mechanism to rotate said rotary platform;
wherein said at least one set of carrier tracks are positioned below said yard crane so that said yard crane can operate on the carriers traveling on said carrier tracks, said at least one set of carrier tracks extend to at least the position below the second track of said container crane so that said container crane can operate on the carriers traveling on said carrier tracks.

Preferably, said rotary mechanism rotates by 90 degrees each time. Said wheel driving means is one selected from the group including electric means, hydraulic power transmission means and aerodynamic means. Said set of wheels comprises four sets of wheels, respectively positioned left side and right side of said bottom frame. The space between said carrier tracks is the same that between sets of wheels at both sides of said bottom frame. The direction of arrangement of containers at front of wharf is perpendicular to that of containers at the container yard at rear of wharf, wherein the first track is perpendicular to direction of long axis of containers at front of wharf, the second track is parallel to direction of long axis of containers at front of wharf, the third track is parallel to direction of long axis of containers at the container yard at rear of wharf.

Using the technical solutions of the present invention, the speed of transportation between cranes at shore of container wharf and the cranes at the container yard will be significantly increased and the problem of the 90-degree rotation will be solved. In addition, the solution can be used at non-automatic wharfs, and, more preferably, at automatic wharfs. The advantage of efficient handling has created a new mode of operation for completely enhancing efficiency and technical level of the container handling port.

### Brief Description of Drawings

The above or other features, natures or advantages of the present invention will be more obvious to the skilled person in the art by the following descriptions of the embodiments accompanying with the drawings, the same sign reference indicates the identical features throughout the description, and wherein:
Figure 1 is a schematic diagram of arrangement of the container transportation system according to an embodiment of the present invention;
Figure 2 is a side view of the container transportation carrier according to an embodiment of the present invention;
Figure 3 is a plan form of the container transportation carrier according to an embodiment of the present invention, which shows operation principle of the rotary mechanism.

### Detailed Description of Preferred Embodiments

The main points of design of the present invention are: implementing level transportation of containers by electric carriers traveling on tracks, which may take containers from one place to another by traveling to and from in a horizontal direction and has a rotary platform thereon being rotatable clockwise or counter-clockwise on a plane with or without containers, so as to achieve 90-degree rotation for arrangement of containers between handling points at front of wharf and at container yard at rear of wharf

According to the above points of design of the present invention, the present invention provides a container transportation carrier, a container transportation system and a whole arrangement scheme of wharf for automatic and high-efficient transportation of containers.

### Container transportation carrier

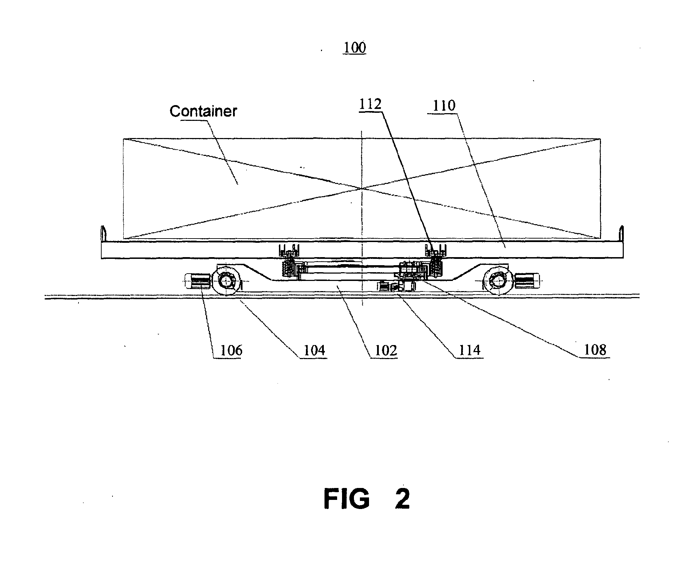

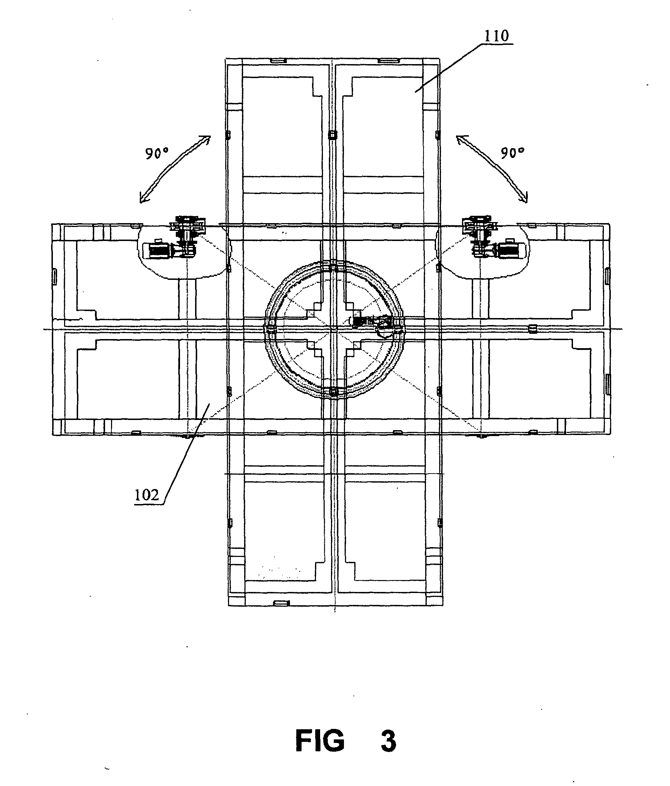

According to a first aspect of the invention, provideding a container transportation carrier Figures 2 and 3 show a structure diagram of the transportation carrier according to an embodiment in the form of a side view and a plan form, respectively. As shown in figures, the carrier 100 comprises:
a bottom frame 102;
a set of wheels 104, mounted on the bottom frame 102, the set of wheels 104 being positioned on a set of tracks so that the container transportation carrier 100 travels along the tracks. According to an embodiment, the set of wheels comprises four sets of wheels, being positioned in four vertices of the bottom frame 102, respectively. More sets of wheels and different arrangement of the sets of wheels may be used. For example, more sets of wheels can be arranged on both sides of the bottom frame 102, which is also in the scope of the present invention;
a wheel driving means 106, mounted on the bottom frame 102, for driving the set of wheels 104. The driving means 106 may be a single driving device with greater power, or small driving devices mounted on the set of wheels 104, respectively For example, in the embodiment as shown, four driving devices 106 respectively mounted on four sets of wheels are used. For the sake of environmental protection, electric, fluid or aerodynamic driving is used as driving means;
a rotary mechanism 108, mounted on the bottom frame 102, being rotatable with respect to the bottom frame,
a rotary platform 110, spanned on the rotary mechanism 108 by rotary supporting means 112, with containers positioned on the rotary platform 110. Referring to the embodiment as shown, it can be seen that the size of the rotary platform 110 is substantially designed based on the size of containers, and it is generally shaped as rectangle. Also, the bottom frame 102 is usually rectangular, with size smaller than that of the rotary platform 110. The rotary mechanism 108 as shown in the embodiment is cylindrical, at center of the bottom frame 102 which aligns with the center of the rotary platform 110. The rotary mechanism 108 may rotate clockwise or counter-clockwise, and rotate by 90 degrees each time in consideration of actual application While the rotary mechanism 108 is shown as cylinder, other shape may be used for the rotary mechanism, for example, hexagon, squareness, ellipse, irregular polygon and etc. may be used as long as the mechanism can be rotated In the embodiment, the rotary supporting means 112 comprises four supporting pieces at quartering points of circumference of the cylindrical rotary mechanism 108. As such, the rotary supporting means can be formed by other means;
a rotary driving means 114, mounted on the bottom frame 102, for driving the rotary mechanism 108 to rotate the rotary platform 110

By the above rotary mechanism, rotary platform and rotary driving means, clockwise or counter-clockwise rotation by 90 degrees of the rotary platform with respect to the bottom frame can be implemented, so that containers positioned on the rotary platform are subject to rotation by 90 degrees and rotation for arrangement between front of wharf and the container yard at rear of wharf.

The transportation carrier may be in single use as vehicle for ground transportation. Preferably, the transportation carrier is used with the track of the present invention, and more preferably, the transportation carrier is used with the whole arrangement scheme of wharf of the present invention.

### Container transportation system

Preferably, the above transportation carrier is used with the track of the present invention. The transportation carrier may straightly travel to and fro on the track, and cooperate with the cranes in different directions to achieve high efficiency and automation of handling of containers

According to a second aspect of the invention, provideding a container transportation system, comprising:
at least one set of carrier tracks 200 (referring to fig. 1), the carrier tracks 200 are parallel to the tracks of a yard crane at rear of wharf, that is, parallel to direction of long axis of containers piled at rear of wharf;
transportation carriers 100, at least one of the transportation carriers 100 is on the at least one set of carrier tracks 200 Figures 2 and 3 show a structure diagram of the carrier 100 according to an embodiment in the form of a side view and a plan form, respectively. As shown in figures, the carrier 100 comprises:
   a bottom frame 102;
   a set of wheels 104, mounted on the bottom frame 102, the set of wheels 104 being positioned on a set of tracks so that the container transportation carrier 100 travels along the tracks. According to an embodiment, the set of wheels comprises four sets of wheels, being positioned in four vertices of the bottom frame 102, respectively. More sets of wheels and different arrangement of the sets of wheels may be used For example, more sets of wheels can be arranged on both sides of the bottom frame 102, which is also in the scope of the present invention;
   a wheel driving means 106, mounted on the bottom frame 102, for driving the set of wheels 104. The driving means 106 may be a single driving device with greater power, or small driving devices respectively mounted on the set of wheels 104. For example, in the embodiment as shown, four driving devices 106 mounted on four sets of wheels respectively are used. For the sake of environmental protection, electric, fluid or aerodynamic driving is used for the driving means,
   a rotary mechanism 108, mounted on the bottom frame 102, being rotatable with respect to the bottom frame;
   a rotary platform 110, spanned on the rotary mechanism 108 by rotary supporting means 112, with containers positioned on the rotary platform 110. Referring to the embodiment as shown, it can be seen that the size of the rotary platform 110 is substantially designed based on the size of containers, and it is generally shaped as rectangle. Also, the bottom frame 102 is usually rectangular, with size smaller than that of the rotary platform 110. The rotary mechanism 108 as shown in the embodiment is cylindrical, at center of the bottom frame 102 which aligns with the center of the rotary platform 110. The rotary mechanism 108 may rotate clockwise or counter-clockwise, and rotate by 90 degrees each time in consideration of actual application. While the rotary mechanism 108 is shown as cylinder, other shape may be used for the rotary mechanism, for example, hexagon, squareness, ellipse, irregular polygon and etc. may be used as long as the mechanism can be rotated. In the embodiment, the rotary supporting means 112 comprises four supporting pieces at quartering points of circumference of the cylindrical rotary mechanism 108. As such, the rotary supporting means can be formed by other means;
   a rotary driving means 114, mounted on the bottom frame 102, for driving the rotary mechanism 108 to rotate the rotary platform 110.

By the above rotary mechanism, rotary platform and rotary driving means, clockwise or counter-clockwise rotation by 90 degrees of the rotary platform with respect to the bottom frame can be implemented, so that containers positioned on the rotary platform are subject to rotation by 90 degrees and rotation for arrangement between front of wharf and the container yard at rear of wharf.

In operations of the container transportation system, the direction of the yard crane is identical to that of arrangement of the containers at the container yard (direction of long axis), i.e. parallel to the carrier track 200. First, the yard crane handles containers onto the rotary platform of the carrier, and then the carrier travels along the carrier track until it is below the container crane at front of wharf. The direction of the crane at front of wharf is identical to that of arrangement of the containers at front of wharf (direction of long axis), i.e. perpendicular to the carrier track 200. At that time, by the rotary mechanism, rotary platform and rotary driving means, the rotary platform rotate containers clockwise or counter-clockwise by 90 degrees so that the direction of containers (direction of long axis) is identical to the container crane at front of wharf, and thus convenient handling can be implemented by the container crane at front of wharf. While the above is illustrated as transportation of containers from the container yard to front of wharf, the above flow will be inversed if the transportation from front of wharf to the container yard is performed.

### Whole arrangement scheme of container wharf

In order to exert the advantages of the present invention to the extent of maximum and enhance automation and handling efficiency of the container wharf, the present invention provides a whole arrangement scheme of container wharf

According to a third aspect of the invention, provideding a container transportation system, as shown in Fig 1, comprising:
a container crane 300 at front of wharf, the container crane 300 having a first track 302 and a second track 304 perpendicular to each other, the container crane can move in two direction perpendicular to each other along the first track 302 and the second track 304. The first track 302 is perpendicular to direction of long axis of containers at front of wharf, and the second track 304 is parallel to direction of long axis of containers at front of wharf. The first track 305 is mainly used to cause the container crane 300 to move along water front of wharf to different repositories for handling containers. The number of the container cranes 300 may be more than one, but only one is show for illustration;
a yard crane 400 at rear of wharf, the yard crane 400 having a third track 402 parallel to the first track 302 of the container crane 300 and perpendicular to the second track 304 of said container crane 300 The third track 402 is parallel to direction of long axis of containers at the container yard at rear of wharf. The third track 402 is mainly use to cause the yard crane 400 to move in the direction of arrangement of containers at the container yard for handling containers at different positions;
at least one set of carrier tracks 200 (referring to fig. 1), the carrier tracks 200 are parallel to the tracks of a yard crane at rear of wharf, that is, parallel to direction of long axis of containers piled at rear of wharf;
transportation carriers 100, at least one of the transportation carriers 100 is on the at least one set of carrier tracks 200. Figures 2 and 3 show a structure diagram of the carrier 100 according to an embodiment in the form of a side view and a plan form, respectively. As shown in figures, the carrier 100 comprises:
   a bottom frame 102;
   a set of wheels 104, mounted on the bottom frame 102, the set of wheels 104 being positioned on a set of tracks so that the container transportation carrier 100 travels along the tracks. According to an embodiment, the set of wheels comprises four sets of wheels, being positioned in four vertices of the bottom frame 102, respectively. More sets of wheels and different arrangement of the sets of wheels may be used For example, more sets of wheels can be arranged on both sides of the bottom frame 102, which is also in the scope of the present invention;
   a wheel driving means 106, mounted on the bottom frame 102, for driving the set of wheels 104. The driving means 100 may be a single driving device with greater power, or small driving devices respectively mounted on the set of wheels 104 For example, in the embodiment as shown, four driving devices 106 mounted on four sets of wheels respectively are used. For the sake of environmental protection, electric, fluid or aerodynamic driving is used for the driving means,
   a rotary mechanism 108, mounted on the bottom frame 102, being rotatable with respect to the bottom frame;
   a rotary platform 110, spanned on the rotary mechanism 108 by rotary supporting means 112, with containers positioned on the rotary platform 110.. Referring to the embodiment as shown, it can be seen that the size of the rotary platform 110 is substantially designed based on the size of containers, and it is generally shaped as rectangle. Also, the bottom frame 102 is usually rectangular, with size smaller than that of the rotary platform 110. The rotary mechanism 108 as shown in the embodiment is cylindrical, at center of the bottom frame 102 which aligns with the center of the rotary platform 110. The rotary mechanism 108 may rotate clockwise or counter-clockwise, and rotate by 90 degrees each time in consideration of actual application. While the rotary mechanism 108 is shown as cylinder, other shape may be used for the rotary mechanism, for example, hexagon, squareness, ellipse, irregular polygon and etc. may be used as long as the mechanism can be rotated. In the embodiment, the rotary supporting means 112 comprises four supporting pieces at quartering points of circumference of the cylindrical rotary mechanism 108. As such, the rotary supporting means can be formed by other means,
   a rotary driving means 114, mounted on the bottom frame 102, for driving the rotary mechanism 108 to rotate the rotary platform 110

By the above rotary mechanism, rotary platform and rotary driving means, clockwise or counter-clockwise rotation by 90 degrees of the rotary platform with respect to the bottom frame can be implemented, so that containers positioned on the rotary platform are subject to rotation by 90 degrees and rotation for arrangement between front of wharf and the container yard at rear of wharf.

In the above arrangement scheme, the at least one set of carrier tracks 200 are positioned below the yard crane 400 so that the yard crane 400 can operate on the transportation carriers 100 traveling on the carrier tracks 200, and the at least one set of carrier tracks 200 extend to at least the position below the second track 304 of the container crane 300 so that the container crane 300 can operate on the transportation carriers 100 traveling on the carrier tracks 200.

In operations of the container transportation system, the direction of the yard crane 400 is identical to that of arrangement of the containers at the container yard (direction of long axis), i.e. parallel to the carrier track 200. First, the yard crane 400 hoists containers from the container yard along the third track 402, moves to a position (position C in Fig. 1) above the carrier 100 along the third track 402 and handles containers onto the rotary platform of the carrier 100, and then the carrier travels, along the carrier track 200, to a position (position B in Fig. 1) below the second track 304 of the container crane 300 at front of wharf The direction of the crane 300 at front of wharf is identical to that of arrangement of the containers at front of wharf (direction of long axis), i.e. perpendicular to the carrier track 200, At that time, by the rotary mechanism, rotary platform and rotary driving means, the rotary platform rotate containers clockwise or counter-clockwise by 90 degrees so that the direction of containers (direction of long axis) is identical to the container crane 300 at front of wharf (position A in Fig 1), and thus convenient handling can be implemented by the container crane 300 at front of wharf. It shall be clarified that the process of rotation may be performed at any time after the carrier 100 travels out of the area of container yard and before it reaches the position below the second track (e.g, between position A and position B as shown in Fig 1). The rotation may be performed at the process of traveling of the carrier 100 or when the transportation carrier 100 stops. After rotation, the container crane 300 reaches the position of the first track 302 along the second track 304, and then handles containers onto the ship along the first track 302. While the above is illustrated as transportation of containers from the container yard to front of wharf, the above flow will be inversed if the transportation from front of wharf to the container yard is performed.

### Conclusion

The present invention has solved the problem of level transportation of containers at front and rear of wharf at a container wharf by not utilizing conventional level carriers driven by gas engine (container trucks, AGV or straddle carrier), but utilizing electric platform transportation carriers traveling on tracks The transportation carriers may transport containers hoisted by devices at front of wharf to the yard at rear of wharf or transport containers hoisted by devices of the yard at rear of wharf to front of wharf.

The transportation carrier travels on tracks by wheels and is comprised of sets of wheels, wheel driving means, a bottom frame, a rotary platform, rotary driving means and rotary supporting means, Not only single-row 20' containers/double 20' containers/40' containers/45' containers but also double-row 20' containers/double 20' containers/40' containers/45' containers may be positioned on the rotary platform of the transportation carrier, which is mounted on the bottom frame of the transportation carrier by the rotary supporting means, and performs plane rotation on the bottom frame of the transportation carrier by the rotary driving means. The rotary platform may rotate with or without containers

When containers are unloading, a device at front of wharf hoists the containers onto the rotary platform of the transportation carrier, the rotary platform rotates by 90 degree and then travels to a container yard at rear of wharf along tracks, by which not only transportation of containers from front to rear of wharf but also 90-degree rotation between directions of containers arranged on ship and arranged at the yard are achieved. When containers are loading, the above procedure is inversed. The significant creative is that the problem of high-efficient transportation of containers between front and rear of wharf and the problem of 90-degree rotation between arrangement directions of containers on ship and containers at the container yard have both been solved, and that the object of power saving and environmental protection can be achieved since not gas engine driving but electric driving is used for the transportation carrier.

Summing up, using the technical solutions of the present invention, the speed of transportation between cranes at shore of container wharf and ones at the container yard will be significantly increased and the problem of 90-degree rotation will be solved In addition, the handling way can be used at non-automatic wharfs, and, preferably, at automatic wharfs. The advantage of efficient handling has created a new mode of operation for completely enhancing efficiency and technical level of the container handling port.

The previous description of the disclosed embodiments is provided to enable any person skilled in the art to make or use the present invention. Various modifications to these embodiments will be readily apparent to those skilled in the art and the generic principles defined herein may be applied to other embodiments without departing from the spirit or scope of the invention Thus, the present invention is not intended to be limited to the embodiments shown herein but is to be accorded the widest scope consistent with the principles and novel features disclosed herein

## Claims

1. A container transportation carrier, comprising:
a bottom frame;
a set of wheels, mounted on said bottom frame, said set of wheels being positioned on a set of tracks so that said container transportation carrier travels along the tracks;
a wheel driving means, mounted on said bottom frame, for driving said set of wheels;
a rotary mechanism, mounted on said bottom frame, being rotatable with respect to said bottom frame;
a rotary platform, spanned on said rotary mechanism by rotary supporting means, with containers positioned on said rotary platform;
a rotary driving means, mounted on said bottom frame, for driving said rotary mechanism to rotate said rotary platform.

2. The container transportation carrier of claim 1, wherein said rotary mechanism is cylindrical, being positioned at center of said bottom frame which aligns with the center of said rotary platform,

3. The container transportation carrier of claim 2, wherein said rotary mechanism rotates by 90 degrees each time.

4. The container transportation carrier of claim 3, wherein said rotary supporting means comprises four supporting pieces at quartering points of circumference of said cylindrical rotary mechanism.

5. The container transportation carrier of claim 1, wherein said wheel driving means is one selected from the group including: electric means, hydraulic power transmission means and aerodynamic means.

6. A container transportation system, comprising:
at least one set of carrier tracks, said carrier tracks parallel to tracks of a yard crane at rear of a wharf, that is, parallel to the direction of long axis of containers piled at rear of wharf,
transportation carriers, at least one of the transportation carriers on the at least one set of carrier tracks, said transportation carrier, comprising:
a bottom frame;
a set of wheels, mounted on said bottom frame, said set of wheels being positioned on a set of tracks so that said container transportation carrier travels along the tracks;
a wheel driving means, mounted on said bottom frame, for driving said set of wheels;
a rotary mechanism, mounted on said bottom frame, rotatable with respect to said bottom frame;
a rotary platform, spanned on said rotary mechanism by rotary supporting means, containers positioned on said rotary platform,
a rotary driving means, mounted on said bottom frame, for driving said rotary mechanism to rotate said rotary platform.

7. The container transportation system of claim 6, wherein said rotary mechanism rotates by 90 degrees each time.

8. The container transportation system of claim 6, wherein said wheel driving means is one selected from the group including: electric means, hydraulic power transmission means and aerodynamic means

9. The container transportation system of claim 8, wherein said set of wheels comprises four sets of wheels, positioned at the left side and the right side of said bottom frame, respectively , and
the distance between said carrier tracks is the same as that between the sets of wheels at both sides of said bottom frame.

10. A container transportation system, comprising:
a container crane at front of a wharf, having a first track and a second track perpendicular to each other, said container crane is movable in two directions perpendicular to each other along a first and a second track;
a yard crane at rear of the wharf, having a third track parallel to the first track of said container crane and perpendicular to the second track of said container crane;
at least one set of carrier tracks, said carrier tracks parallel to tracks of a yard crane at rear of wharf, that is, parallel to direction of long axis of containers piled at rear of wharf;
transportation carriers, at least one of the transportation carriers on the at least one set of carrier tracks, said transportation carrier, comprising:
a bottom frame;
a set of wheels, mounted on said bottom frame, said set of wheels being positioned on a set of tracks so that said container transportation carrier travels along the tracks;
a wheel driving means, mounted on said bottom frame, for driving said set of wheels;
a rotary mechanism, mounted on said bottom frame, rotatable with respect to said bottom frame;
a rotary platform, spanned on said rotary mechanism by rotary supporting means, containers positioned on said rotary platform;
a rotary driving means, mounted on said bottom frame, for driving said rotary mechanism to rotate said rotary platform;
wherein said at least one set of carrier tracks are positioned below said yard crane so that said yard crane can operate on the transportation carriers traveling on said carrier tracks, said at least one set of carrier tracks extend to at least the position below the second track of said container crane so that said container crane can operate on the transportation carriers traveling on said carrier tracks.

11. The container transportation system of claim 10, wherein said rotary mechanism rotates by 90 degrees each time.

12. The container transportation system of claim 10, wherein said wheel driving means is one selected from the group including: electric means, hydraulic power transmission means and aerodynamic means.

13. The container transportation system of claim 12, wherein said set of wheels comprises four sets of wheels, respectively positioned left side and right side of said bottom frame, and
the distance between said carrier tracks is the same as that between sets of wheels at both sides of said bottom frame

14. The container transportation system of claim 10, wherein the direction of arrangement of containers at front of wharf is perpendicular to that of containers at the container yard at rear of wharf,
wherein the first track is perpendicular to the direction of long axis of containers at front of wharf,
the second track is parallel to the direction of long axis of containers at front of wharf,
the third track is parallel to the direction of long axis of containers at the container yard at rear of wharf.
